# EUROPEAN PATENT APPLICATION

(11) **EP 2 722 251 A1**
(43) Date of publication of application: **23.04.2014**
(21) Application number: 12199344.8
(22) Date of filing: 24.12.2012
(51) Int. Cl.: B62B 9/08, B60B 33/00

(54) **Front wheel braking device for stroller**

(30) Priority: 16.10.2012 CN 201220528437 U
(71) Applicant: O'SK Baby & Children Products (Fujian) Co., Ltd., Zhang Zhou City, Fujian (CN)
(72) Inventor: Yao, Fulai, Fujian Province (CN)
(74) Representative: Hellmich, Wolfgang

(57) **Abstract**

The invention discloses a front wheel braking device for a stroller, which comprises a front wheel support and front wheels, wherein the front wheel support has forefoot tubes and a foot rest; the forefoot tubes are respectively sleeved at both ends of the foot rest and connected with the foot rest; brake mechanisms are disposed between the front wheel support and the front wheels; and the end portion of the front wheel support is connected with the brake mechanisms of which both ends are connected with the front wheels. The front wheel braking device for the stroller has the advantages that: the front wheel braking device for the stroller can realize link brake for the front wheels, is convenient to operate and can realize braking only by being slightly stepped on; the brake is sensitive and has good effect; the safety of the stroller can be improved; and the front wheel braking device for the stroller has a reasonable structure and is easy to produce.

## Description

The invention relates to the technical field of strollers, in particular to a front wheel braking device for a stroller.

Strollers for infants or children usually do not need braking devices due to low driving speed. However, as the infants or the children usually tend to imitate adults' behaviors, the assembly of a braking device on a stroller can meet the children's curiosity and allows the stroller to be more recreational and motorial.

Meanwhile, in practice, though no mechanomotive force is used, there is still a certain risk if the stroller has no braking device in the case of a smooth road and particularly in the case of an uphill or downhill smooth road. Therefore, it's better for the stroller to have the braking device. Moreover, the braking device for the stroller shall have the advantages of simple structure, convenient operation, sensitive brake and safe use. In general, when the stroller is used, the braking device is disposed on the front wheels for the stroller to stop on the uneven ground.

The objective of the invention is to provide a front wheel braking device for a stroller, having the advantages of compact structure and convenient use.

In order to achieve the objective, the invention adopts the technical proposal that: the front wheel braking device for the stroller comprises a front wheel support and front wheels, wherein the front wheel support has forefoot tubes and a foot rest; the forefoot tubes are respectively sleeved at both ends of the foot rest and connected with the foot rest; brake mechanisms are disposed between the front wheel support and the front wheels; and the end portion of the front wheel support is connected with the brake mechanisms of which both ends are connected with the front wheels. As the brake mechanisms are disposed between the front wheel support and the front wheels, the front wheel braking device for the stroller has the advantages that: the front wheels can realize link brake; the brake is sensitive and has good effect; the safety of the stroller can be improved; and the front wheel braking device for the stroller has a reasonable structure and is easy to produce.

As a further improvement of the invention, front wheel fixed tubes are disposed inside the foot rest, connected with the forefoot tubes and forefoot inner sleeves respectively, and connected with various end portions of the forefoot inner sleeves and the brake mechanisms in turn.

As a further improvement of the invention, each brake mechanism has a first front wheel base and a second front wheel base which is provided with a first groove and a second groove; a spring column of the first front wheel base is extended into the first groove; a buckle is disposed inside the first groove and engaged with the spring column; components and parts assembled in the first groove are a front wheel brake return spring, a front wheel brake lower shaft sleeve and a front wheel base lower cover respectively from the bottom up; a front wheel brake lever is disposed on the outside of the first front wheel base; and a buckle opening is formed on the outside of the first front wheel base and engaged with the brake lever.

As a further improvement of the invention, the second groove of the second front wheel base is provided with a spring assembly; a front wheel base spring core of the spring assembly is disposed at the bottom of the second front wheel base; a front wheel brake spring is disposed on the upper part of the front wheel base spring core; a front wheel suspension spring is sleeved on the front wheel base spring core; a front wheel brake iron pin holder is sleeved on the spring assembly; and the second front wheel base also has a front wheel positioning buckle and a brake iron particle.

As a further improvement of the invention, a first front wheel brake wire rope passes through the forefoot fixed tubes and the forefoot inner sleeves and is connected with the front wheel brake levers; second front wheel brake wire ropes are disposed on lower ends of the front wheel brake lower shaft sleeves; and the other ends of the second front wheel brake wire ropes are disposed on the front wheel brake iron pin holders which are clamped into the second front wheel base. The first front wheel brake wire rope and the second front wheel brake wire ropes have the function of force transmission and are used for transmitting brake pressure applied by a user to the whole brake mechanisms.

As a further improvement of the invention, brake return torsion springs are disposed between the first front wheel bases and the front wheel brake levers; two legs of the brake return torsion springs are connected with the first front wheel bases; and the other ends of the brake return torsion springs are connected with the front wheel brake levers. The brake return torsion springs can alleviate the force required by brake release and is more applicable for children.

As a further improvement of the invention, pulley grooves are formed on both sides of the second front wheel bases, and front wheel brake iron pins fixed on the front wheel brake iron pin holders pass through the pulley grooves. Due to the structure, the second front wheel bases can be allowed to directly act on the front wheels, so that the braking effect can be sensitive.

As a further improvement of the invention, front wheel core nails pass through the front wheels and are clamped into the second front wheel bases together with the front wheel base spring cores.

As a further improvement of the invention, the front wheel positioning buckles are disposed between the first front wheel bases and the second front wheel bases. Due to the additional arrangement of the front wheel positioning buckles, the position and direction of the first front wheel bases and the second front wheel bases are fixed, so that the stroller can realize linear motion.

The front wheel braking device for the stroller has the advantages that: the second front wheel bases of the front wheel support are convenient in assembly and disassembly; when used, no matter the second front wheel bases are in any direction or the front wheels are in the case of suspension, the front wheel braking device for the stroller can realize link brake for the front wheels, is convenient to operate and can realize brake only by being slightly stepped on; the brake is sensitive and has good effect; the safety of the stroller can be improved; and the front wheel braking device for the stroller has a reasonable structure and is easy to produce.
Fig. 1 is a structure diagram of the front wheel braking device for the stroller, provided by the invention;
Fig. 2 is an exploded view of the front wheel braking device for the stroller, provided by the invention;
Fig. 3 is an exploded view of a second front wheel base for the front wheel braking device for the stroller, provided by the invention;
Fig. 4 is a section view illustrating the state before left braking of a front wheel support for the front wheel braking device for the stroller, provided by the invention;
Fig. 5 is a section view illustrating the state before right braking of the front wheel support for the front wheel braking device for the stroller, provided by the invention;

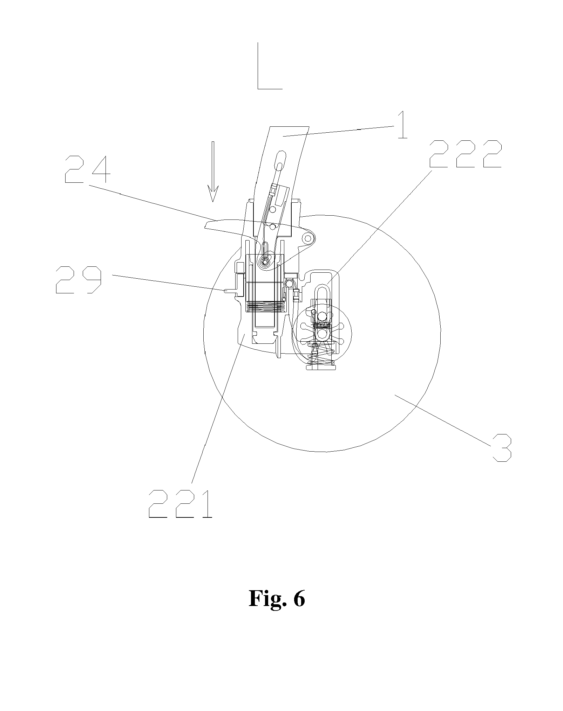

Fig. 6 is a section view illustrating the state after left braking of the front wheel support for the front wheel braking device for the stroller, provided by the invention;

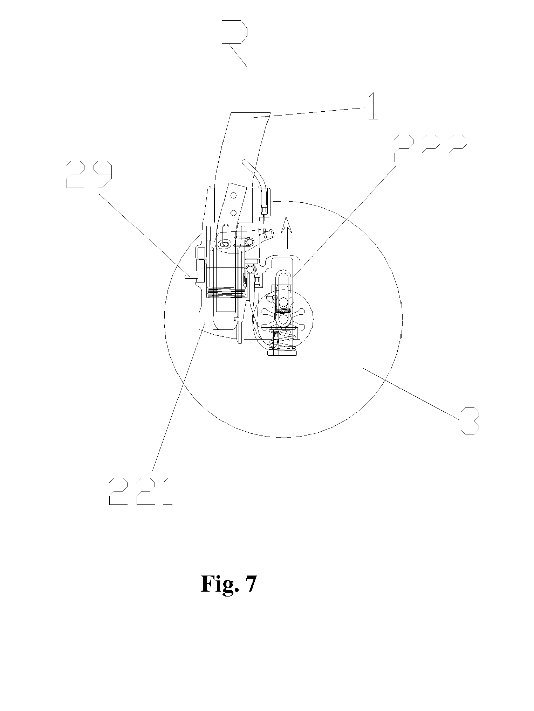

Fig. 7 is a section view illustrating the state after right braking of the front wheel support for the front wheel braking device for the stroller, provided by the invention;

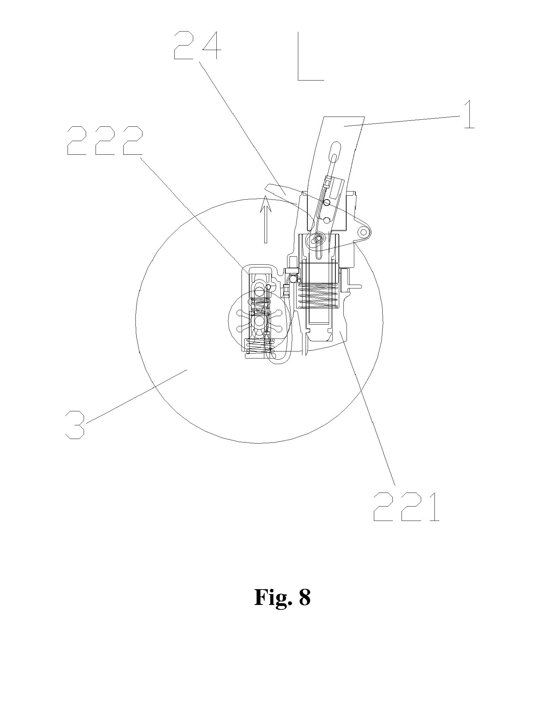

Fig. 8 is a section view illustrating the state before braking of the front wheel support for the front wheel braking device for the stroller, provided by the invention, in the case of left steering and suspension;

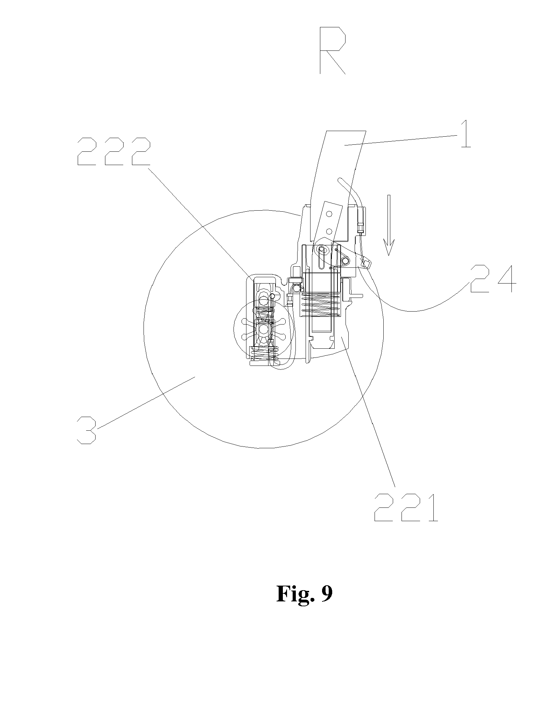

Fig. 9 is a section view illustrating the state before braking of the front wheel support for the front wheel braking device for the stroller, provided by the invention, in the case of right steering and suspension;

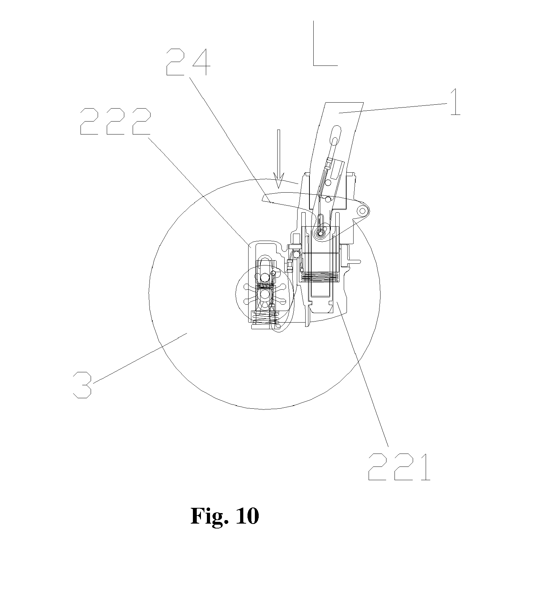

Fig. 10 is a section view illustrating the state after braking of the front wheel support for the front wheel braking device for the stroller, provided by the invention, in the case of left steering and suspension; and

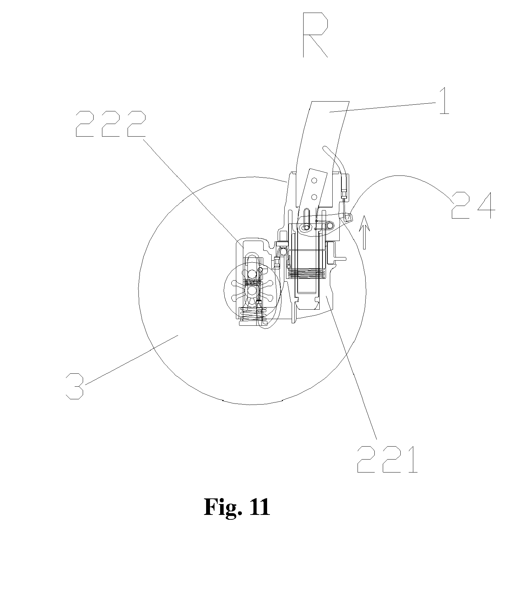

Fig. 11 is a section view illustrating the state after braking of the front wheel support for the front wheel braking device for the stroller, provided by the invention, in the case of right steering and suspension.

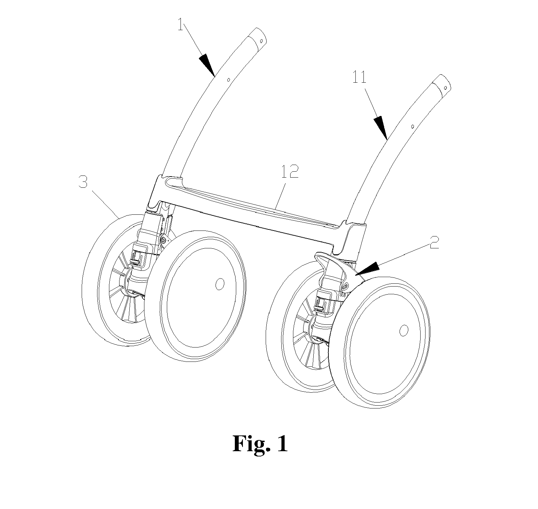

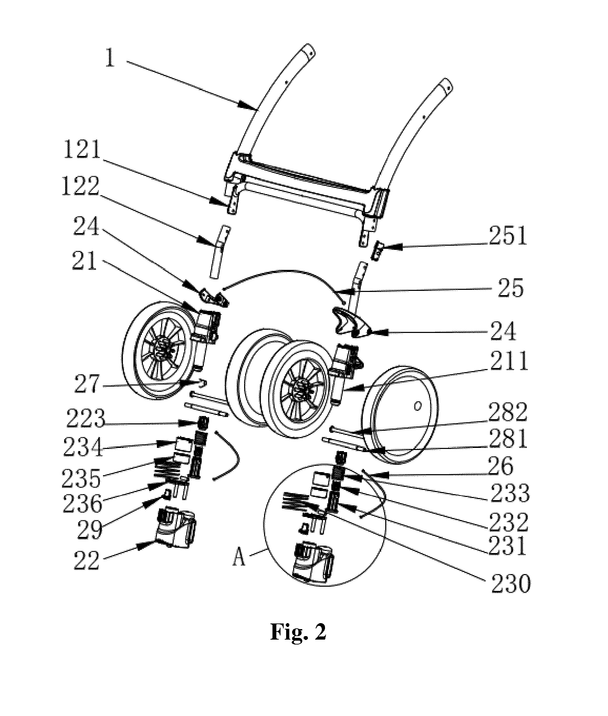

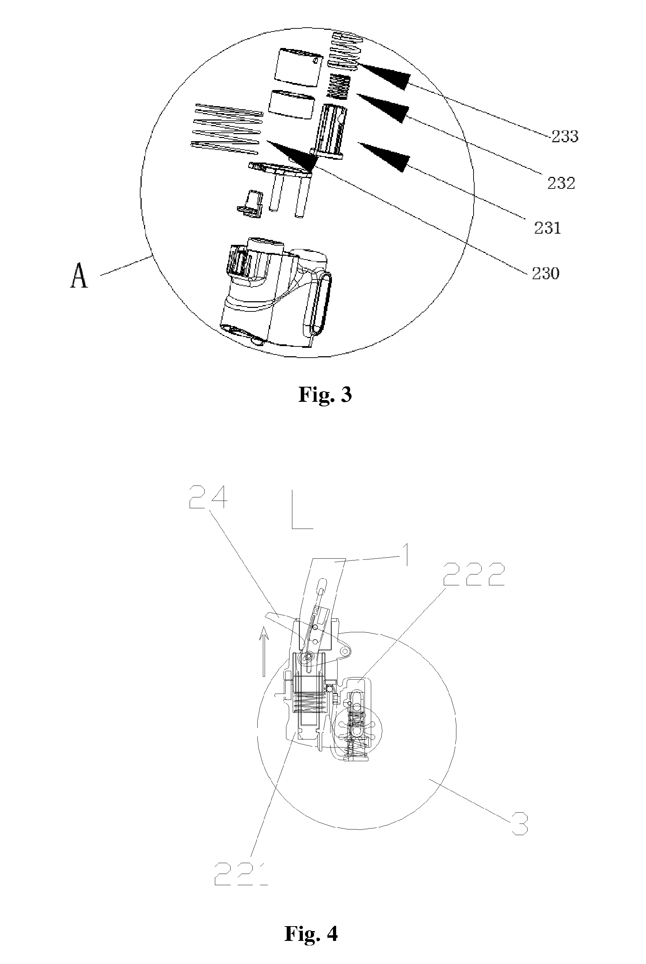

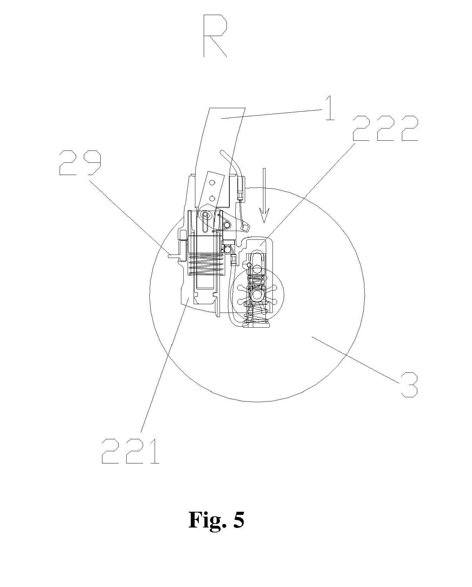

For more clear understanding of the objective, the technical proposal and the advantages of the invention, further detailed description is given to the invention with the attached drawings, as illustrated in Figs. 1 to 5.

The front wheel braking device for the stroller comprises a front wheel support 1 and front wheels 3, wherein the front wheel support 1 has forefoot tubes 11 and a foot rest 12; the forefoot tubes 11 are respectively sleeved at both ends of the foot rest 12 and connected with the foot rest 12; brake mechanisms 2 are disposed between the front wheel support 1 and the front wheels 3; and the end portion of the front wheel support 1 is connected with the brake mechanisms 2 of which both ends are connected with the front wheels 3. As the brake mechanisms are disposed between the front wheel support 1 and the front wheels 3, the front wheel braking device for the stroller has the advantages that: the front wheels 3 can realize link brake; the brake is sensitive and has good effect; the safety of the stroller can be improved; and the front wheel braking device for the stroller has a reasonable structure and is easy to produce.

Front wheel fixed tubes 121 are disposed inside the foot rest 12, connected with the forefoot tubes 11 and forefoot inner sleeves 122 respectively, and connected with various end portions of the forefoot inner sleeves 122 and the brake mechanisms 2 in turn.

Each brake mechanism 2 has a first front wheel base 21 and a second front wheel base 22 which is provided with a first groove 221 and a second groove 222; a spring column 211 of the first front wheel base 21 is extended into the first groove 221; a buckle is disposed inside the first groove and engaged with the spring column 211; components and parts assembled in the first groove are a front wheel brake return spring 230, a front wheel brake lower shaft sleeve 235 and a front wheel base lower cover 236 respectively from the bottom up; a front wheel brake lever 24 is disposed on the outside of the first front wheel base 21; and a buckle opening is formed on the outside of the first front wheel base 21 and engaged with the brake lever 24.

The second groove of the second front wheel base is provided with a spring assembly; a front wheel base spring core 231 of the spring assembly is disposed at the bottom of the second front wheel base 22; a front wheel brake spring 232 is disposed on the upper part of the front wheel base spring core 231; a front wheel suspension spring 233 is sleeved on the front wheel base spring core 231; a front wheel brake iron pin holder 223 is sleeved on the spring assembly; and the second front wheel base 22 also has a front wheel positioning buckle 29 and a brake iron particle.

A first front wheel brake wire rope 25 passes through the forefoot fixed tubes 121 and the forefoot inner sleeves 122 and is connected with the front wheel brake levers 24; second front wheel brake wire ropes 26 are disposed on lower ends of the front wheel brake lower shaft sleeves 235; and the other ends of the second front wheel brake wire ropes 26 are disposed on the front wheel brake iron pin holders 223 which are clamped into the second front wheel bases 22. The first front wheel brake wire rope 25 and the second front wheel brake wire ropes 26 have the function of force transmission and are used for transmitting brake pressure applied by a user to the whole brake mechanisms 2.

Brake return torsion springs 27 are disposed between the first front wheel bases 21 and the front wheel brake levers 24; two legs of the brake return torsion springs 27 are connected with the first front wheel bases 21; and the other ends of the brake return torsion springs 27 are connected with the front wheel brake levers 24. The brake return torsion springs 27 can alleviate the force required by brake release and is more applicable for children.

Pulley grooves are formed on both sides of the second front wheel bases 22, and front wheel brake iron pins 281 fixed on the front wheel brake iron pin holders 223 pass through the pulley grooves. Due to the structure, the second front wheel base 22 can be allowed to directly act on the front wheels 3, so that the braking effect can be sensitive.

Front wheel core nails 282 pass through the front wheels 3 and are clamped into the second front wheel bases 22 together with the front wheel base spring cores 231.

The front wheel positioning buckles 29 are disposed between the first front wheel bases 21 and the second front wheel bases 22. Due to the additional arrangement of the front wheel positioning buckles 29, the position and direction of the first front wheel bases 21 and the second front wheel bases 22 are fixed, so that the stroller can realize linear motion.

In the case of braking, one front wheel brake lever 24 is stepped on until the front wheel brake lever 24 is clamped into the buckle opening, and meanwhile, a front wheel brake upper shaft sleeve 234 of the first front wheel base 21 is extended into the first groove of the second front wheel base and presses down the front wheel brake lower shaft sleeve 235. Herein, the other front wheel brake lever 24 is pulled by the first front wheel brake wire rope 25 to perform the same action and drives the front wheel brake upper shaft sleeve 234 to press down the front wheel brake lower shaft sleeve 235 of the second front wheel base 22; the front wheel brake lower shaft sleeve 235 drives the second front wheel brake wire ropes 26 to extend and act on the spring assembly, so that the spring assembly is pressed. Subsequently, the front wheel brake iron pin holders 28 are pulled to drive the brake iron pins 281 to move down to the pulley grooves in the middle of the front wheels and clamp the front wheels 3. Therefore, the front wheel braking device for the stroller can have the braking effect no matter that the front wheels 3 are in any direction and in the case of suspension.

In the case of brake release, the front wheel brake lever 24 is kicked up until the front wheel brake lever 24 is disengaged from the buckle opening. Herein, the front wheel brake upper shaft sleeve 234 of the first front wheel base 21 does not press down the front wheel brake lower shaft sleeve 235. Meanwhile, the other front wheel brake lever 24 is pulled by the first front wheel brake wire rope 25 to perform the same action. The second front wheel brake wire ropes 26 are released, and the spring assembly is restored. Subsequently, the front wheel brake iron pin holders 28 are pulled to drive the brake iron pins 281 to be disengaged from the pulley grooves of the front wheels 3. Moreover, the front wheel brake levers 24 are returned under the action of the brake return springs 27 and the front wheel brake return springs 230.

## Claims

1. A front wheel braking device for a stroller, comprising a front wheel support (1) and front wheels (3), wherein the front wheel support (1) has forefoot tubes (11) and a foot rest (12); the forefoot tubes are respectively sleeved at both ends of the foot rest (12) and connected with the foot rest (12); brake mechanisms (2) are disposed between the front wheel support (1) and the front wheels (3); and the end portion of the front wheel support (1) is connected with the brake mechanisms (2) of which both ends are connected with the front wheels (3).

2. The front wheel braking device for the stroller according to claim 1, wherein front wheel fixed tubes (121) are disposed inside the foot rest (12), connected with the forefoot tubes (11) and forefoot inner sleeves (122) respectively, and connected with various end portions of the forefoot inner sleeves (122) and the brake mechanisms (2) in turn.

3. The front wheel braking device for the stroller according to claim 2, wherein each brake mechanism (2) has a first front wheel base (21) and a second front wheel base (22) which is provided with a first groove (221) and a second groove (222); a spring column (211) of the first front wheel base (21) is extended into the first groove (221); a buckle is disposed inside the first groove and engaged with the spring column (211); components and parts assembled in the first groove are a front wheel brake return spring (230), a front wheel brake lower shaft sleeve (235) and a front wheel base lower cover (236) respectively from the bottom up; a front wheel brake lever (24) is disposed on the outside of the first front wheel base (21); and a buckle opening is formed on the outside of the first front wheel base (21) and engaged with the brake lever (24).

4. The front wheel braking device for the stroller according to claim 3, wherein the second groove (222) of the second front wheel base (22) is provided with a spring assembly; a front wheel base spring core (231) of the spring assembly is disposed at the bottom of the second front wheel base (22); a front wheel brake spring (232) is disposed on the upper part of the front wheel base spring core (231); a front wheel suspension spring (233) is sleeved on the front wheel base spring core (231); and a front wheel brake iron pin holder (223) is sleeved on the spring assembly.

5. The front wheel braking device for the stroller according to claim 3 or 4, wherein a first front wheel brake wire rope (25) passes through the forefoot fixed tubes (121) and the forefoot inner sleeves (122) and is connected with the front wheel brake levers (24); second front wheel brake wire ropes (26) are disposed on lower ends of the front wheel brake lower shaft sleeves (235); and the other ends of the second front wheel brake wire ropes (26) are disposed on the front wheel brake iron pin holders (223) which are clamped into the second front wheel bases (22).

6. The front wheel braking device for the stroller according to one of claims 3 to 5, wherein brake return torsion springs (27) are disposed between the first front wheel bases (21) and the front wheel brake levers (24); two legs of the brake return torsion springs (27) are connected with the first front wheel bases (21); and the other ends of the brake return torsion springs (27) are connected with the front wheel brake levers (24).

7. The front wheel braking device for the stroller according to one of claims 3 to 6, wherein pulley grooves are formed on both sides of the second front wheel bases (22); and front wheel brake iron pins (281) fixed on the front wheel brake iron pin holders (223) pass through the pulley grooves.

8. The front wheel braking device for the stroller according to one of claims 3 to 7, wherein front wheel core nails (282) pass through the front wheels (3) and are clamped into the second front wheel bases (22) together with the front wheel base spring cores (231).

9. The front wheel braking device for the stroller according to one of claims 3 to 8, wherein front wheel positioning buckles (29) are disposed between the first front wheel bases (21) and the second front wheel bases (22).
